**Europäisches Patentamt**

**European Patent Office**

**Office européen des brevets**

(19)

(11) Numéro de publication: **0 003 462**
**A1**

## (12) DEMANDE DE BREVET EUROPEEN

(21) Numéro de dépôt: **79400049.7**

(22) Date de dépôt: **24.01.79**

(51) Int. Cl.²: **B 65 G 45/00**

(30) Priorité: **27.01.78 FR 7802355**

(43) Date de publication de la demande:
**08.08.79 Bulletin 79/16**

(84) Etats contractants désignés:
**BE CH DE GB IT LU NL SE**

(71) Demandeur: **Chouteau, Henri**
**Montgobert**
**F-02600 Villers-Cotterets(FR)**

(84) Etats contractants désignés:
**BE CH DE GB IT LU NL SE**

(71) Demandeur: **Lagros, Gilbert**
**4 rue Nahan**
**F-54490 Piennes(FR)**

(84) Etats contractants désignés:
**BE CH DE GB IT LU NL SE**

(72) Inventeur: **Chouteau, Henri**
**Montgobert**
**F-02600 Villers-Cotterets(FR)**

(72) Inventeur: **Lagros, Gilbert**
**4 rue Nahan**
**F-54490 Piennes(FR)**

(74) Mandataire: **Bloch, Robert**
**39 avenue de Friedland**
**F-75008 Paris(FR)**

(54) Procédé de nettoyage d'une surface souple en mouvement et dispositif pour la mise en oeuvre de ce procédé pour le nettoyage des bandes transporteuses.

(57) Dispositif pour le nettoyage d'une bande de manutention (10) d'un transporteur, caractérisé par le fait qu'il comporte au moins un câble résistant (2) tendu parallèlement à cette bande (10) et sensiblement transversalement à la direction de transport de la bande (10), et des moyens agencés (51-53) pour maintenir en contact la surface extérieure utile de la bande (10) et le câble (2), ainsi que le procédé mis en oeuvre par ce dispositif.

FIG.1

EP 0 003 462 A1

Procédé de nettoyage d'une surface souple en mouvement et son
application au nettoyage des bandes transporteuses

La présente invention concerne un procédé de nettoyage d'une
surface souple en mouvement, ainsi qu'un dispositif pour la mise
en oeuvre de ce procédé pour le nettoyage des bandes transporteuses.

L'invention concerne tout d'abord un procédé de nettoyage d'une
surface souple en mouvement encrassée par des matériaux à éliminer.

Divers procédés déjà connus depuis longtemps pour le nettoyage
de surfaces souples en mouvement mettent en oeuvre des moyens
lourds ou fragiles, dont l'emploi, l'efficacité et le coût n'ont
jamais été particulièrement satisfaisants.

La présente invention a donc comme premier objet un procédé de
nettoyage simple, efficace et peu onéreux.

A cet effet, l'invention concerne un procédé de nettoyage d'une
surface souple en mouvement, caractérisé par le fait qu'on tend
un câble, ou un fil, parallèlement à cette surface et sensiblement transversalement à la direction du mouvement de la surface,
et  on maintient en contact cette surface en mouvement et le câble.

Les matériaux qui ont adhéré à une portion de la surface en mou-

0003462

-2-

vement, et que le procédé de l'invention vise à éliminer de cette surface, sont ainsi décollés et retenus par le câble, grâce au frottement du câble sur la bande créé par le contact entre cette portion de surface et le câble et le mouvement relatif du câble et de la bande, et sont simultanément éjectés.

Dans le cas où la surface souple, au cours de son mouvement, est tournée vers le sol, il est avantageux de tendre le câble contre la portion de surface tournée vers le sol, de sorte que les matériaux ayant encrassé la surface soient alors éjectés par gravité.

La présente invention concerne également une application de ce procédé, et notamment un dispositif pour le nettoyage des bandes transporteuses.

On sait que l'encrassement des bandes transporteuses a toujours posé de sérieux problèmes aux exploitants, en particulier lorsque ces bandes sont destinées à manutentionner certains matériaux pondéreux qui, s'ils restent collés à la surface des bandes transporteuses, peuvent les détériorer.

Le nettoyage de ces bandes est donc un impératif qui malheureusement vient compliquer l'exploitation des transporteurs à bande. C'est ainsi qu'on connaît différents dispositifs de nettoyage de bande transporteuse.

Les racleurs, les brosses décrasseuses, ou autres dispositifs de raclage, sont assez encombrants, s'usent trop rapidement et ne sont pas toujours d'une grande efficacité.

Les rouleaux vibrants, quant à eux, sont d'un coût d'exploitation considérable, si l'on tient compte et de l'investissement initial et de l'entretien. En outre, leur mise en place exige un grand encombrement.

Enfin, les dispositifs à insufflation d'air ou d'eau requièrent des installations complexes et finalement peu fiables.

La présente invention vise donc à éliminer les inconvénients des dispositifs de nettoyage connus.

A cet effet, l'invention concerne également un dispositif de nettoyage d'une bande transporteuse pour la mise en oeuvre du procédé de nettoyage de surface souple en mouvement, caractérisé par le fait qu'il comporte au moins un câble résistant tendu parallèlement à la bande et sensiblement transversalement à la direction de transport de la bande et des moyens agencés pour maintenir en contact la surface extérieure utile de la bande et le câble.

Le décollage des particules de matières gênantes, et donc le nettoyage de la bande, s'effectue ainsi par le frottement du câble sur la surface extérieure de la bande.

Dans une forme de réalisation préférée du dispositif de l'invention, le câble résistant avance transversalement à la direction de transport de la bande transporteuse, grâce à quoi on prévient une usure excessive de ce câble.

L'invention sera mieux comprise à l'aide de la description suivante d'une forme de réalisation préférée du dispositif de nettoyage suivant l'invention, forme représentée sur le dessin annexé, sur lequel :

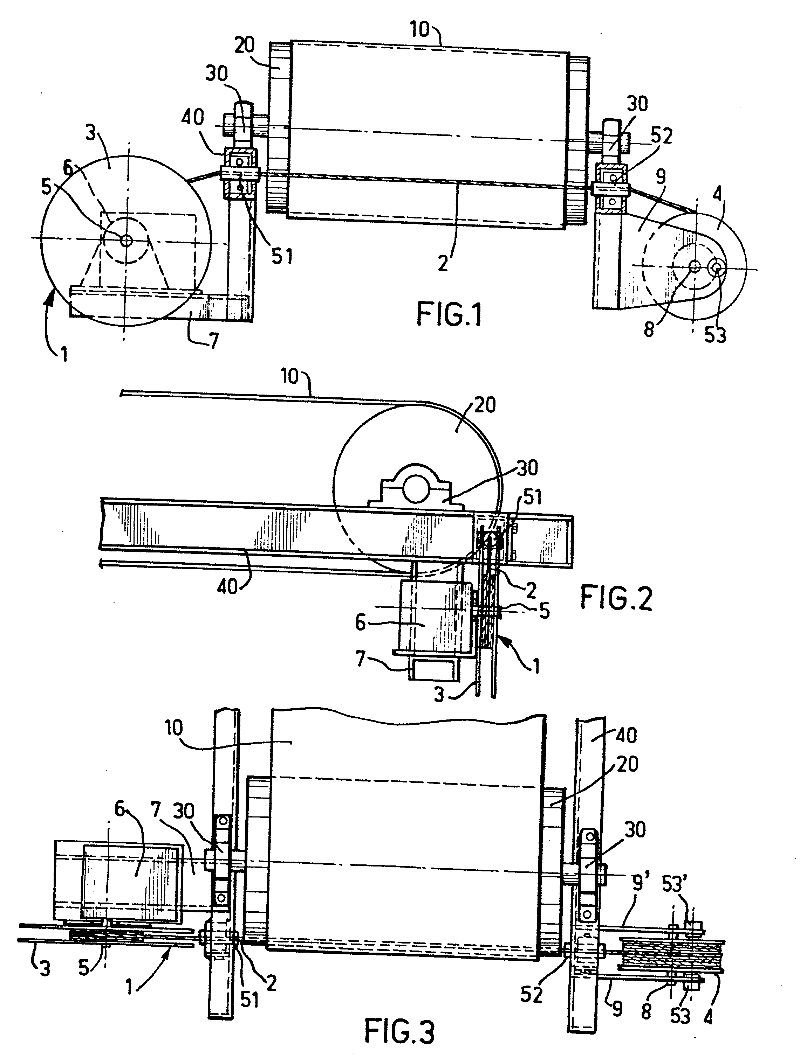

La figure 1 représente une vue de face du dispositif de l'invention.

La figure 2 représente une vue de côté gauche du dispositif de la figure 1, et

La figure 3 représente une vue de dessus du dispositif de la figure 1.

Le dispositif 1 de l'invention représenté sur le dessin est destiné au nettoyage de la bande transporteuse 10 d'un transporteur continu, partiellement représenté, dont on voit sur le dessin l'un des tambours d'extrémité 20, qui pourrait être un tambour d'entraînement, tambour 20 monté rotatif dans des paliers 30 fixés à un châssis 40 du transporteur. On n'a pas représenté sur le dessin, d'autant plus qu'ils ne font pas partie de l'invention, les organes d'entraînement, de tension et d'alimentation du transporteur.

La bande 10, qui est l'organe porteur du transporteur, est une bande souple sans fin en mouvement, qui s'enroule sur les deux tambours d'extrémité, et notamment le tambour 20. Le dispositif de l'invention 1 proprement dit comporte un câble, ou fil 2, tendu entre une bobine d'entraînement et de réception 3 et une bobine d'alimentation 4. La bobine d'entraînement 3 du câble 1 est montée sur l'arbre de sortie 5 d'un groupe moto-réducteur 6 fixé au châssis 40 du transporteur par l'intermédiaire d'un bâti 7. La bobine d'alimentation 4 du câble 1 est montée rotative sur son arbre 8 tourillonnant entre deux flasques 9 et 9' fixés au châssis 40 du transporteur.

Le câble 1 est tendu parallèlement à la bande 10 et transversalement à la direction de transport de la bande 10, c'est-à-dire transversalement au châssis 40 du transporteur, en étant positionné par deux guide-câble 51 et 52 fixés au châssis 40 le long d'une génératrice du tambour 20. Deux limiteurs de couple 53 et 53', respectivement fixés aux flasques 9 et 9', permettent de régler la tension du câble 2 entre la bobine menante 3 et la bobine menée 4.

Les guide-câble 51 et 52 sont fixés au châssis 40 de manière que le câble 2 exerce une légère pression sur la surface extérieure de la bande transporteuse 10, en appui sur le tambour d'extrémité 20. Par ailleurs, le contact, ou mieux le frottement entre le câble 2 et la bande 10, s'effectue sur la moitié inférieure du tambour d'extrémité 20. Avant d'aborder le fonctionnement du dispositif de nettoyage de l'invention, tel qu'il vient d'être décrit, certaines remarques s'imposent.

Le câble, ou fil, 2 de nettoyage peut être un câble en métal, mais toute autre matière suffisamment résistante conviendrait également.

Le dispositif représenté ne comporte qu'un seul câble, mais l'invention peut également comprendre plusieurs câbles, ou brins, l'efficacité du nettoyage ne pouvant qu'en être accrue.

Le frottement du câble 2 représenté sur la bande 10 est engendré par la réaction du tambour d'extrémité 20 sur la bande 10 qui se trouve, dans la zone du dispositif de l'invention, en appui sur ce tambour 20, grâce à quoi la bande 10 peut être appliquée contre le fil 2, et inversement. A cet égard, l'invention n'est pas limitée à la forme de réalisation représentée.

En effet, on peut tout à fait concevoir de disposer le câble du dispositif de l'invention contre la surface extérieure du brin de retour de la bande transporteuse. On pourrait alors prévoir un cylindre de contre-appui fixé au châssis 40 et disposé entre les deux brins de la bande transporteuse, pour appliquer la surface extérieure du brin de retour de la bande contre le câble.

On pourrait aussi faire passer le câble à travers le châssis 40 faisant ainsi fonction de guide-câble et prévoir également deux platines fixées l'une en face de l'autre sur le châssis 40, l'une pour recevoir une bobine d'entraînement de réception et une bobine d'alimentation, l'autre pour recevoir au moins une poulie de renvoi. Dans ce dernier cas, particulièrement simple à concevoir et donc non illustré sur le dessin, il n'est pas nécessaire de prévoir un cylindre de contre-appui, le frottement du câble sur la bande étant assuré par le fait que le câble est situé dans le plan du châssis, ce dernier appliquant ainsi en permanence le câble contre la surface extérieure du brin de retour de la bande.

Le fonctionnement du dispositif de l'invention est particulièrement simple. Le contact entre le câble 2 et la surface extérieure de la bande 10 et le mouvement relatif du câble et de la bande, dans le sens longitudinal du transporteur, créent un frottement du câble sur la bande qui décolle les particules de matière ayant adhéré à la surface extérieure de la bande pendant le transport de la matière. Ces particules décollées et retenues par le câble sont simultanément éjectées par gravité.

Le câble 2, déroulé depuis la bobine d'alimentation 4 du câble par la bobine d'entraînement et de réception 3 du câble, est également animé d'une vitesse transversale, continue, discontinue ou alternative, de sorte que l'usure du câble est ainsi limitée, la portion de nettoyage du câble étant en permanence renouvelée. Il faut noter ici que la vitesse de déroulement du câble, le long de la bande transporteuse, est fonction de la durée de vie du câble désirée, c'est-à-dire de la nature du matériau transporté par la bande, de l'enrobage de la bande transporteuse, de sa largeur et de sa propre vitesse d'enroulement. A la limite, le câble 2 pourrait être immobile. Par ailleurs, on peut également prévoir un amortisseur d'à-coups du câble.

Revendications de brevet

1. Procédé de nettoyage d'une surface souple en mouvement, caractérisé par le fait qu'on tend un câble parallèlement à cette surface et sensiblement transversalement à la direction du mouvement de la surface, et on maintient en contact cette surface en mouvement et le câble.

2. Procédé selon la revendication 1, dans lequel la surface souple, au cours de son mouvement, est tournée vers le sol, caractérisé par le fait qu'on tend le câble contre la portion de surface tournée vers le sol.

3. Dispositif pour la mise en oeuvre du procédé selon l'une des revendications 1 et 2 pour le nettoyage d'une bande de manutention en mouvement le long d'un châssis d'un transporteur, caractérisé par le fait qu'il comporte au moins un câble résistant tendu parallèlement à cette bande et sensiblement transversalement à la direction de transport de la bande, et des moyens agencés pour maintenir en contact la surface extérieure utile de la bande et le câble.

4. Dispositif selon la revendication 3, dans lequel lesdits moyens comprennent un cylindre de contre-appui fixé au dit châssis et disposé entre les deux brins de la bande transporteuse pour appliquer la surface extérieure du brin de retour de la bande contre le câble.

5. Dispositif selon la revendication 3, dans lequel les dits moyens sont constitués par le dit châssis, le dit câble passant à travers le dit châssis qui applique ainsi le câble contre la surface extérieure du brin de retour de la bande.

6. Dispositif selon la revendication 3, dans lequel lesdits moyens comprennent l'un des tambours d'extrémité du transporteur sur lesquels est enroulée la bande, le câble étant tendu le long de la moitié inférieure dudit tambour d'extrémité.

7. Dispositif selon l'une des revendications 3 à 6, dans lequel le câble résistant est entraîné en déplacement transversalement à la direction de transport de la bande.

8. Dispositif selon la revendication 7, dans lequel le câble est déroulé d'une bobine d'alimentation par une bobine d'entraînement et de réception.

9. Dispositif selon la revendication 8, dans lequel au moins un limiteur de couple est associé à ladite bobine d'alimentation.

10. Dispositif selon l'une des revendications 3 à 9, dans lequel le câble est positionné contre la bande par des guide-câble.

0003462

FIG.1

FIG.2

FIG.3

**Office européen des brevets**

## RAPPORT DE RECHERCHE EUROPEENNE

| Catégorie | Citation du document avec indication, en cas de besoin, des parties pertinentes | Revendica-tion concernée | CLASSEMENT DE LA DEMANDE (Int. Cl.³) |
|---|---|---|---|
| | **DOCUMENTS CONSIDERES COMME PERTINENTS** | | |
| X | <u>FR - A - 2 264 743</u> (BRESCHARD)<br>* document complet * | 1-3,<br>6-8,<br>10 | B 65 G 45/00 |
| | -- | | |
| X | <u>DE - C - 801 144</u> (EITLE MASCHINEN-FABRIK)<br>* revendications 1 et 4 * | 1,3 | |
| | -- | | **DOMAINES TECHNIQUES RECHERCHES (Int. Cl.³)** |
| | <u>DE - C - 1 051 725</u> (ESCH-WERKE)<br>* colonne 2, ligne 52 à colonne 3, ligne 18 * | 1,6 | B 65 G 45/00 |
| | -- | | |
| | <u>FR - A - 1 420 666</u> (ASTOURIC)<br>* colonne 1, lignes 1 à 9; fig. 1 à 3 * | 1,3,<br>5 | |
| | -- | | |
| A | <u>DE - B - 2 162 175</u> (BAYERISCHE BRAUNKOHLEN-INDUSTRIE)<br>* document complet * | | **CATEGORIE DES DOCUMENTS CITES** |
| | -- | | X: particulièrement pertinent<br>A: arrière-plan technologique<br>O: divulgation non-écrite<br>P: document intercalaire |
| A | <u>US - A - 2 878 926</u> (H.A. HARTY et al)<br>* document complet * | | T: théorie ou principe à la base de l'invention<br>E: demande faisant interférence<br>D: document cité dans la demande<br>L: document cité pour d'autres raisons |
| | ---- | | |
| | | | &: membre de la même famille. document correspondant |

X Le présent rapport de recherche a été établi pour toutes les revendications

| Lieu de la recherche | Date d'achèvement de la recherche | Examinateur |
|---|---|---|
| Berlin | 18-04-1979 | SIMON |

OEB Form 1503.1  06.78